## Europäisches Patentamt

## European Patent Office

## Office européen des brevets

(19)

(11) Veröffentlichungsnummer: **0 096 736**
**B1**

(12) **EUROPÄISCHE PATENTSCHRIFT**

(45) Veröffentlichungstag der Patentschrift:
**15.10.86**

(21) Anmeldenummer: **83103837.7**

(22) Anmeldetag: **20.04.83**

(51) Int. Cl.⁴: **B 32 B 13/12,** C 09 D 3/58,
C 08 L 63/02, C 09 J 3/16,
B 05 D 7/16

(54) **Verfahren zur Erzielung eines kraftschlüssigen Verbundes zwischen mit Duroplasten beschichteten, lackierten Gegenständen und Beton.**

(30) Priorität: **16.06.82 DE 3222529**

(43) Veröffentlichungstag der Anmeldung:
**28.12.83 Patentblatt 83/52**

(45) Bekanntmachung des Hinweises auf die Patenterteilung:
**15.10.86 Patentblatt 86/42**

(84) Benannte Vertragsstaaten:
**DE FR GB IT NL SE**

(56) Entgegenhaltungen:
**EP-A-0 005 617**
**DE-B-1 159 839**
**FR-A-2 517 797**
**GB-A-1 244 424**

(73) Patentinhaber: **HÜLS AKTIENGESELLSCHAFT,**
**Patentabteilung / PB 15 - Postfach 13 20, D-4370**
**Marl 1 (DE)**

(72) Erfinder: **Riemer, Heinz, Dr., Fritz- Reuter- Strasse**
**15, D-4250 Bottrop 2 (DE)**
Erfinder: **Weiss, Jörn- Volker, Dr., Im Hadkamp 1,**
**D-4358 Haltern 3 (DE)**
Erfinder: **Mutzberg, Friedhelm, Gleiwitzer Strasse**
**55, D-4330 Mühlheim (DE)**

LIBER, STOCKHOLM 1986

EP 0 096 736 B1

## Beschreibung

In jüngerer Zeit werden in immer stärkerem Maße gasförmige und flüssige Massengüter, wie Gase und Öl, mit Hilfe von Rohrleitungssystemen überteilweise erhebliche Distanzen hinweg transportiert. Die Verlegung von Rohrleitungen auf dem Meeresboden sowie im gebirgigen Gelände bei sehr unterschiedlichen klimatischen Gegebenheiten läßt erkennen, welche erheblichem Anforderungen an die Witerungs- und Korrosionsbeständigkeit der auf die Rohre aufgebrachten Schutzschicht gestellt werden müssen.

Verwendet man ungeschützte Metallrohre, so treten bereits beim Verlegen Beschädigungen auf, die infolge Korrosion nach kurzer Zeit zum Durchrosten des Rohresführen. In den letzten Jahren wurden daher Lacke und speziell auch Pulverlacke entwickelt, mit denen ein hervorragender Oberflächenschutz gewährleistet ist (vgl. z. B. DE-OS 25 07 786). In einer Reihe von Fällen ist es wünschenswert oder sogar erforderlich, auf pulverlackierten Rohren eine Betonummantelung aufzubringen. Dies ist zum Beispiel der Fall, wenn das Rohr, das für eine Unterwasserverlegung notwendige Gewichterhalten oder zusätzlich geschützt werden soll. Schließlich kann es auch aus Gründen einer sicheren Verlegung abgebracht sein, das Rohrfest mit Beton zu verbinden. Dem Einsatz von Beton steht jedoch die schlechte Haftung an der pulverlackierten Rohroberfläche entgegen.

Auch bei der Verwendung pulverbeschichteter Baustähle wird ein kraftschlüssiger Verbund zwischen Beton und den Armierungsstählen gefordert. Ein solcher Verbund läßt sich durch eine spezielle Formgebung der Stahlteile nur in unbefriedigender Weise erzielen.

Es sind bereits Verfahren der Haftvermittlung zwischen Beton und Kunstharzoberflächen bekannt, die sich grundsätzlich auf den Verbund zwischen Beton und pulverbeschichteten Gegenständen übertragenlassen. So beschreibt z. B. die JP-OS 53 041 020 die Verwendung von Primern auf Silanbasis zur Verbesserung der Haftung von Beton auf einem Urethanharzüberzug. Der Nachteil dieser Verfahren besteht jedoch darin, daß die angestrebte Haftungsverbesserung einen zusätzlichen Arbeitsgang erfordert.

Einen Verbund zwischen Metalloberflächen und Beton kann man mit Vinylacetatharzen herstellen, die Zementpulver enthalten. In diesem Fall wird zwar eine Haftung erreicht; der Korrosionsschutz ist jedoch nicht gewährleistet.

Aufgabe dieser Erfindung war es nun, mit modifizierten Zementmörtelmischungen einen direkten Verbund zwischen mit Duroplasten beschichteten, lackierten Oberflächen und Beton zu erreichen.

Es wurde jetzt gefunden, daß ein solcher Verbund mit Epoxidharz-Zementmörtelmischungen erreicht werden kann, die Epoxidharz-Diammoniumsalz-Emulsionen folgender Zusammensetzung enthalten:
- ein flüssiges Epoxidharz
- als Emulgator einen primären aliphatischen Alkohol mit 12 bis 14 C-Atomen und/oder dessen Addukt mit bis zu 10 Ethylenoxidgruppen und gegebenenfalls Laurinsäure oder 2-Ethylhexanol
- als latenten Härter das Reaktionsprodukt, das man durch vollständige Neutralisation einen Diamins der Formeln I oder II

I $H_2N - CH_2 - R - NH_2$
II $H_2N - R - CH_2 - R - NH_2$

mit Oxalsäure erhält, wobei R ein substituierten Alkylen- oder Cycloalkylenrest mit 6 bis 9 C-Atomen oder Aralkylenrest mit 7 bis 9 C-Atomen ist. Die Oxalsäure kann bis zu 25 % durch Essigsäure und/oder bis zu 60 % durch eine gegebenenfalls hydroxylgruppenhaltige Dicarbonsäure mit 3 bis 6 C-Atomen oder ein Isomeres der Phthalsäure ersetzt sein. Derartige Emulsionen werden in der DE-OS 32 22 531 beschrieben.

Die Epoxidharz-Zementmörtel enthalten die soeben beschriebenen Epoxidharz-Diammoniumsalz-Emulsionen, vorzugsweise, bezogen auf den Zementmörtel, in einer Menge von 10 bis 30 Gewichtsprozent. Man trägt diese Mischung direkt auf die lackierte Oberfäche auf.

Man kann auf diese Weise alle lackierten Gegenstände mit Beton beschichten; beispielsweise kann man Gegenstände verwenden, die mit einem flüssigen Epoxidharz behandelt wurden. Jedoch hat es sich als zweckmäßig erwiesen, von pulverlackierten Gegenständen auszugehen. Besonders geeignet für Anwendungen im Dauerfeuchtbereich (seeverlegte Großrohre, Armierungsstähle für Brücken) sind Pulverlacke auf der Basis von Epoxidharzen, die mit Aminen gehärtet werden.

Die äußere Form und auch die Größe der Gegenstände sind nicht als verfahrenskritisch anzusehen: beispielsweise kann es sich um Stäbe, Drähte, Bänder, Platten und Rohre handeln. Auch das Material, aus dem diese Gegenstände bestehen, ist von untergeordneter Bedeutung, solange der Lack bzw. Pulverlack darauf fest haftet. Man kann z. B. Holz, Kunststoff, Keramik, Glas und Metall verwenden. Eine besondere Bedeutung hat das vorliegende Verfahren für den Verbund pulverlackierter Rohre bzw. pulverlackierter Armierungsstähle mit Beton.

Das Überziehen von Gegenständen mit pulverförmigen Überzugsmitteln ist bekannt (vgl. z. B. Ullmanns Encyklopädie der technischen Chemie, 4. Auflage, Band 15, Seite 347 ff, 1977). Die Polymeren, die auf die Metalloberfläche als Pulver aufgebracht werden und nach dem Schmelzen eine Schutzschicht bilden, können als nicht vernetzbare bzw. selbstvermetzende Einkomponentensysteme eingesetzt werden.

Wegen der guten mechanischen Eigenschaften (Haftung am metallischen Untergrund, Abriebfestigkeit, Schlagzähigkeit) und des guten Korrosionsschutzes (insbesondere auch bei Salzbeanspruchung) bieten sich für derartige Zwecke - z. B. Brückenkonstruktionen mit Tausalzbeanspruchung, Bohrplattformen in offshore-Bereich bzw. seeverlegte Großrohre für den Öl- und Gastransport, die zur Beschwerung betonummantelt sind - Bindemittelsysteme an, die auf Epoxidharzen, wie z. B. Bisphenol A, basieren. Die genaue chemische Struktur der im Randel erhältlichen Produkte, wie EPIKOTE® 1004 und EPIKOTE® 525 (Hersteller: Deutsche Shell AG, Hamburg), ist nicht bekannt.

Als Vernetzerkomponenten der Epoxidharze kommen sauer reagierende mehrfunktionelle Harze, z. B. carboxylgruppenhaltige Polyester, modifizierte Säureanhydride, oder basische Härter, wie z. B. Dicyandiamide, Imidazoline, Imidazole, infrage.

Doch werden auch andere Pulverlacksystem e, z. B. solche auf Basis OH-haltiger Polyester und aromatischer oder cycloaliphatischer Isocyanate sowie solche auf Basis glycidylgruppenhaltiger Acrylate und carboxylgruppenhaltiger Polyester zur Beschichtung eingesetzt.

Den vorgenannten Bindemittelkombinationen werden in bekannter Weise noch Verlaufharze und Pigmente sowie gegebenenfalls Beschleuniger und Füllstoffe zugesetzt.

Für die Beschichtung lackierter Gegenstände können die üblichen Zementmörtelmischungen eingesetzt werden, beispielsweise eine Mischung folgender Zusammensetzung:

100 Gewichtsteile Portlandzement PZ 35 F
60 Gewichtsteile Wasser
60 Gewichtsteile Elektrofilterasche (EFA)
170 Gewichtsteile Sand 0/1 mm
85 Gewichtsteile Sand 1/3 mm
170 Gewichtsteile Sand 2/3 mm

Der Vorteil des vorliegenden Verfahrens besteht darin, daß erstmals mit Hilfe der beschriebenen Epoxidharzemulsionen ein kraftschlüssiger Verbund zwischen Beton und pulverlackierten Gegenständen ohne zusätzlichen Arbeitsgang für das Aufbringen eines Haftvermittlers hergestellt werden kann und gleichzeitig ein hervorragender Korrosionsschutz gewährleistet ist. Das Verfahren kann insbesondere bei der Verlegung von Rohren angewandt werden. Ein weiteres Anwendungsgebiet liegt in Bausektor.

**Beispiel 1**

Auf zwei 1,5 mm dicke Bleche mit einer Fläche von 130 x 95 mm, die mit einem Pulverlack auf Basis des Epoxidharzes EPIKOTE® 1004 (der Fa. Deutsche Shell AG, Hamburg) und 2-Phenylimidazolin beschichtet worden waren, wurde jeweils ein Rohrabschnitt von 20 mm Höhe und 70 mm Durchmesser so aufgelegt, daß ein zylinderförmiger Hohlraum entstand. In diese Hohlräume wurden Zementmörtelmischungen folgender Zusammensetzung gegossen:

100 Gewichtsteile Portland Zement PZ 35

328 Gewichtsteile Quarzsand 0 - 2 mm
72 Gewichtsteile Quarzmehl W 4
20 Gewichtsteile Emulsion 1 bzw. 2
50 Gewichtsteile Wasser

Die Emulsionen ihrerseits hatten folgende Zusammensetzung: Emulsion 1

100 g Epoxidharz Bisphenol A EP-Wert 0,56
23,5 g IPD
5,5 g Oxalsäure
3,8 g Essigsäure
6,2 g Phthalsäure
14,5 g Laurinsäure
5,0 g Laurylalkohol
<u>87,5 g Wasser</u>
247 g

Emulsion 2

100 g Epoxidharz Bisphenol A EP-Wert 0,56
23,5 g IPD
20,0 g Oxalsäure
6,0 g 2-Ethylhexanol
<u>60,0 g Wasser</u>
209,5 g

Anschließend wurde jeweils ein Haken (Schenkellänge 80 mm) auf dem Mittelpunkt der Zementmörtelfläche aufgesetzt und bis auf das Blech in die Mörtelmischung eingedrückt. Nach einer Härtungszeit von 24 Stunden wurden die Rohrstücke entfernt. An den Haken wurden jeweils Gewichte gehängt und die Gewichtslastung solange um jeweils 1 Newton (N) erhöht, bis sich der Betonkörper vom Blech löste.

Zwei analog hergestellte Proben wurden zunächst 7 Tage über Wasser und anschließend 7 Tage über Luft bei 23 °C gehärtet und anschließend belastet. Die Gaftfestigkeitswerte sind aus Tabelle 1 zu ersehen.

**Vergleichsbeispiel A**

Zum Vergleich wurde ein Prüfkörper ohne Emulsion und stattdessen mit der entsprechenden Menge Wasser hergestellt. Ansonsten wurde wie im Beispiel 1 verfahren.

Tabelle 1

Haftfestigkeitswerte (Belastung in N bis zum Ablösen) bei einer Pulverbeschichtung auf Basis Epoxidharz EPIKOTE® 1004/2-Phenyl-imidazolin

| Härtungszeit bei 23°C in Tagen | Vergleichs-beispiel A | Emulsion 1 | Emulsion 2 |
|---|---|---|---|
| 1 | 29,4 | 98,1 | 98,1 |
| 14 | 22,6 | 105,0 | 144,2 |

## Beispiel 2

Analog zu Beispiel 1 wurde ein Blech mit Pulverlack auf der Basis Epoxidharz EPIKOTE® 1004/Polyesterharz URALAC® P 2228(der Fa. Scado B. V., Zwolle, Niederlande) beschichtet. Der Haftfestigkeitswert einer Zementmörtelmischung, die die Emulsion 2 aus Beispiel 1 enthielt, geht aus der Tabelle 2 hervor.

## Vergleichsbeispiel B

Zum Vergleich wurde ein Prüfkörper ohne Emulsion und stattdessen mit der entsprechenden Menge Wasser hergestellt. Ansonsten wurde wie in Beispiel 2 verfahren.
Tabelle 2
Haftfestigkeitswerte (Belastung in N bis zum Ablösen) bei einer Pulverbeschichtung auf Basis Epoxidharz EPIKOTE® 1004/Polyester-harz URALAC® 2228
Beispiel 2 Vergleichsbeispiel B
63,8 19,6

## Beispiele 3 bis 5, Vergleichsbeispiele C bis E

Es wurden verschiedene lackierte Bleche hergestellt und analog zu Beispiel 1 mit Zementmörtelmischungen behandelt. Während in den Beispielen 3 und 4 bzw. Vergleichsbeispielen C und D Pulverlacke zur Anwendung kamen, handelte es sich im Beispiel 5 bzw. Vergleichsbeispiel E um ein kalthärtendes Epoxidharzsystem. Die Lackzusammensetzung und die Haftfestigkeitswerte gehen aus der Tabelle 3 hervor.
Tabelle 3
Haftfestigkeitswerte (Belastung in N bis zum Ablösen) für verschiedene Lacksysteme nach 24 Stunden Härtung bei 23 °C

| Lackzusammen-setzung | Wasser | Zementmörtelmischung mit | |
| --- | --- | --- | --- |
| | | Emulsion 1 | Emulsion 2 |
| Acrylharz VP 3949[a] | | 34,3 | 67,7 |
| " | 19,6 | | |
| Vernetzer BF 1540[b]/Polyester P 3356[b] | | 34,3 | 98,1 |

### Tabelle 3 - Fortsetzung

| Bsp. | Lackzusammen-setzung | Wasser | Zementmörtelmischung mit | |
| --- | --- | --- | --- | --- |
| | | | Emulsion 1 | Emulsion 2 |
| D | Vernetzer BF 1540[b]/Polyester P3356[b] | 26,0 | | |
| 5 | EPIKOTE® 828[c] Isophorondiamin[b] | | 53,0 | 73,6 |
| E | " | | 34,3 | |

a) Hersteller: Degussa A G, Frankfurt
b) Hersteller: Chemische Werke Hüls AG, Marl
c) Hersteller: Deutsche Shell A G, Hamburg

## Beispiel 6

Auf ein Blech, das mit Pulverlack auf der Basis Epoxidharz EPIKOTE® 1004/2-Phenylimidazolin beschichtet war, wurde die Epoxidharzemulsion 2 aus Beispiel 1 aufgestrichen. Nach einer Trocknungszeit von 24 Stunden wurde der Prüfkörper mit der Zementmörtelmischung aus dem Vergleichsbeispiel A beschichtet und nach dem in Beispiel 1 beschriebenen Meßverfahren eine Haftfestigkeit von 95,0 N bestimmt.

## Beispiel 7

Zur Prüfung der Haftfestigkeit zwischen Baustahl und Zementbeton wurde ein glattwandiger Stahlkörper mit einem Durchmesser von 18 mm und einer Länge von 80 mm, wie er üblicherweise im Betonbau verwendet wird, mit einem Pulverlack auf der Basis EPIKOTE® 1004/2-Phenylimidazolin beschichtet und soweit in die Mitte eines Quaders (Grundfläche 100 x 100 mm, Hohe 64 mm) aus Zementbeton mit Emulsion 2 (siehe Beispiel 1) eingedrückt, daß er aufbeiden Seiten 8 mm herausragte. Nach einer Härtungszeit von sieben Tagen wurde der Stahlkörper aus dem Quader herausgedrückt. Die hierfür benötigte Kraft betrug 29 100 Newton.

## Vergleichsbeispiel F

Es wurde analog wie in Beispiel 7 verfahren, jedoch wurde eine Betonmischung nach Beispiel A verwendet. Die Kraft zum Herausdrücken des Stahlkörpers betrug in diesem Fall 5 900 Newton.

## Patentansprüche

1. Verfahren zur Erzielung eines kraftschlüssigen Verbundes zwischen mit Duroplasten beschichteten, lackierten Gegenständen und Beton,
dadurch gekennzeichnet,
daß man die lackierte Oberfläche mit einer Epoxidharz-Zementmörtelmischung behandelt, die eine Epoxidharz-Diammoniumsalz-Emulsion auf Basis eines flüssigen Epoxidharzes, eines latenten Härters, eines Emulgators und Wasser enthält, wobei
a) der Emulgator einen primären aliphatischen Alkohol mit 12 bis 14 C-Atomen und/oder dessen Addukt mit bis zu 10 Ethylenoxidgruppen darstellt und zusätzlich Laurinsäure enthalten kann oder 2-Ethylhexanol ist und
b) der latente Härter das Reaktionsprodukt darstellt, das man durch vollständige Neutralisation eines Diamins der Formeln I oder II
I $H_2N - CH_2 - R - NH_2$
II $H_2N - R - CH_2 - R - NH_2$
mit Oxalsäure erhält, wobei R ein substituierter Alkylenoder Cycloalkylenrest mit 6 bis 9 C-Atomen oder ein Aralkylenrest mit 7 bis 9 C-Atomen ist und die Oxalsäure bis zu 25 % durch Essigsäure und/oder bis zu 60 % durch eine gegebenenfalls hydroxylgruppenhaltige Dicarbonsäure mit 3 bis 6 C-Atomen oder ein Isomeres der Phthalsäure ersetzt sein kann.

2. Verfahren zur Erzielung eines kraftschlüssigen Verbundes nach Anspruch 1,
dadurch gekennzeichnet,
daß die Epoxidharz-Zementmörtelmischung, bezogen auf die Menge des Zementmörtels, 10 bis 30 Gewichtsprozent der Epoxidharz-Diammoniumsalz-Emulsion enthält.

3. Verfahren nach den Ansprüchen 1 oder 2,
dadurch gekennzeichnet,
daß man pulverlackierte Gegenstände einsetzt.

4. Verfahren nach Anspruch 3,
dadurch gekennzeichnet,
daß man einen Pulverlack auf der Basis Epoxidharz/Amin verwendet.

5. Verfahren nach den Ansprüchen 1 oder 2,
dadurch gekennzeichnet,
daß man als Gegenstände Metall- oder Kunststoffrohre einsetzt.

6. Verfahren nach Anspruch 3,
dadurch gekennzeichnet,
daß man Armierungsstähle aus dem Bausektor einsetzt.

## Claims

1. A process for obtaining a frictional connection between concrete and a duroplast-coated, painted object, characterised in that the painted surface is treated with an epoxy resin/cement mortar mixture which contains an epoxy resin diammonium salt emulsion based on a liquid epoxy resin, a latent hardener, an emulsifier and water,
a) the emulsifier being a primary aliphatic alcohol of 12 to 14 carbon atoms and/or an adduct thereof with up to 10 ethylene oxide units and optionally also containing lauric acid or the emulsifier being 2-ethyl-hexanol, and
b) the latent hardener being the reaction product obtained by complete neutralisation with oxalic acid of a diamine of the formula I or II
I $H_2N-CH_2-R-NH_2$
II $H_2N-R-CH_2-R-NH_2$
where R is a substituted alkylene or cycloalkylene radical of 6 to 9 carbon atoms or an aralkylene radical of 7 to 9 carbon atoms, the oxalic acid being optionally replaced to the extent of up to 25% by acetic acid and/or to the extent of up to 60% by a dicarboxylic acid of 3 to 6 carbon atoms optionally substituted by hydroxy or by a phthalic acid isomer.

2. A process for obtaining a frictional connection according to claim 1, characterised in that the epoxy resin/cement mortar mixture contains 10 to 30% by weight of the epoxy resin diammonium salt emulsion, based on the amount of the cement mortar.

3. A process according to claim 1 or 2, characterised in that an object painted with a powder coating is used.

4. A process according to claim 3, characterised in that a powder coating based on an epoxy resin/amine is used.

5. A process according to claim 1 or 2, characterised in that a metal or plastics tube is used as the object.

6. A process according to claim 3, characterised in that a reinforced steel from the construction field is used.

## Revendications

1. Procédé d'obtention d'une liaison intime entre des objets laqués, enduits de duroplaste, et du béton, caractérisé par le fait qu'on traite la surface laquée avec un mélange de résine époxyde et d'un mortier de ciment qui renferme une émulsion de résine époxyde et de sel de diammonium à base d'une résine époxyde liquide, d'un durcisseur latent, d'un émulsifiant et d'eau, tandis que

a) l'émulsifiant représente un alcool aliphatique primaire comportant de 12 à 14 atomes de carbone et/ou son produit d'addition comportant jusqu'à 10 groupes oxyde d'éthylène et peut complémentairement renfermer de l'acide laurique, ou bien est le 2-éthyl-hexanol, et que

b) le durcisseur latent représente le produit réactionnel que l'on obtient en neutralisant totalement avec de l'acide oxalique une diamine des formules (I) ou (II)

$H_2N-CH_2-R-NH_2$ (I)

$H_2N-R-CH_2-R-NH_2$ (II)

dans lesquelles R représente un radical alkylène ou cycloalkylène substitué comportant de 6 à 9 atomes de carbone, ou bien un radical aralkylène comportant de 7 à 9 atomes de carbone, et l'acide oxalique peut être remplacé jusqu'à 25 % par de l'acide acétique et/ou jusqu'à 60 % par un acide dicarboxylique comportant de 3 à 6 atomes de carbone et renfermant éventuellement des groupes hydroxyle, ou bien par un isomère de l'acide phtalique.

2. Procédé pour l'obtention d'une liaison intime selon la revendication 1, caractérisé par le fait que le mélange de résine époxyde et de mortier de ciment renferme, relativement à la quantité du mortier de ciment, de 10 à 30 % en poids de l'émulsion de résine époxyde et de sel de diammonium.

3. Procédé selon la revendication 1 ou 2, caractérisé par le fait qu'on utilise des objets laqués à la poudre.

4. Procédé selon la revendication 3, caractérisé par le fait qu'on utilise une laque en poudre à base de résine époxyde et d'amine.

5. Procédé selon la revendication 1 ou 2, caractérisé par le fait qu'on utilise comme objets des tubes de métal ou de matière plastique.

6. Procédé selon la revendication 3, caractérisé par le fait qu'on utilise des fers d'armature du secteur du bâtiment.